# FASCICULE DE BREVET EUROPEEN

(11) **EP 2 815 493 B1**
(45) Date de publication et mention de la délivrance du brevet: **30.03.2016**
(21) Numéro de dépôt: 13705970.5
(22) Date de dépôt: 14.02.2013
(51) Int. Cl.: H02M 3/158, H02M 7/219, H02M 1/32

(54) **DISPOSITIF DE CONVERSION ÉLECTRIQUE AC/DC AUTORISANT UNE RÉCUPÉRATION D'ÉNERGIE ET UNE GESTION DES COURTS-CIRCUITS CÔTÉ CONTINU ET PROCÉDÉ DE COMMANDE D'UN TEL DISPOSITIF**
ELEKTRISCHE AC/DC-UMWANDLUNGSVORRICHTUNG ZUR ENERGIERÜCKGEWINNUNG UND VERWALTUNG VON GLEICHSTROMSEITIGEN KURZSCHLÜSSEN UND STEUERVERFAHREN EINER SOLCHEN VORRICHTUNG
AC/DC ELECTRICAL CONVERSION DEVICE PERMITTING ENERGY RECOVERY AND MANAGEMENT OF DC-SIDE SHORT-CIRCUITS AND CONTROL METHOD THEREOF

(30) Priorité: 17.02.2012 FR 1251507
(43) Date de publication de la demande: 24.12.2014
(73) Titulaire: ALSTOM Technology Ltd, 5400 Baden (CH)
(72) Inventeur: GARCIA-SOTO, Guillermo, 91300 Massy (FR)
(74) Mandataire: Brevalex
(86) Numéro de dépôt international: PCT/EP2013/053015
(87) Numéro de publication internationale: WO 2013/120966

(56) Documents cités:
- WO-A1-96/18937
- GB-A- 2 447 875
- US-A1- 2009 160 248

## Description

### DOMAINE TECHNIQUE

La présente invention concerne un dispositif de conversion électrique alternatif-continu (AC/DC) à monter entre un réseau alternatif monophasé ou multiphasé et un réseau à courant continu et possédant une fonction de gestion de court-circuit apparaissant côté réseau à courant continu.

Il a également une fonction de récupération d'énergie entre le réseau alternatif monophasé ou multiphasé et le réseau à courant continu. Ce dispositif de conversion électrique alternatif-continu peut être utilisé notamment dans applications ferroviaires. Dans ces applications ferroviaires, le réseau électrique à courant continu est destiné à alimenter en courant continu un véhicule ferroviaire tracteur via une sous-station électrique et une ligne d'alimentation en courant continu appelée caténaire.

### ÉTAT DE LA TECHNIQUE ANTÉRIEURE

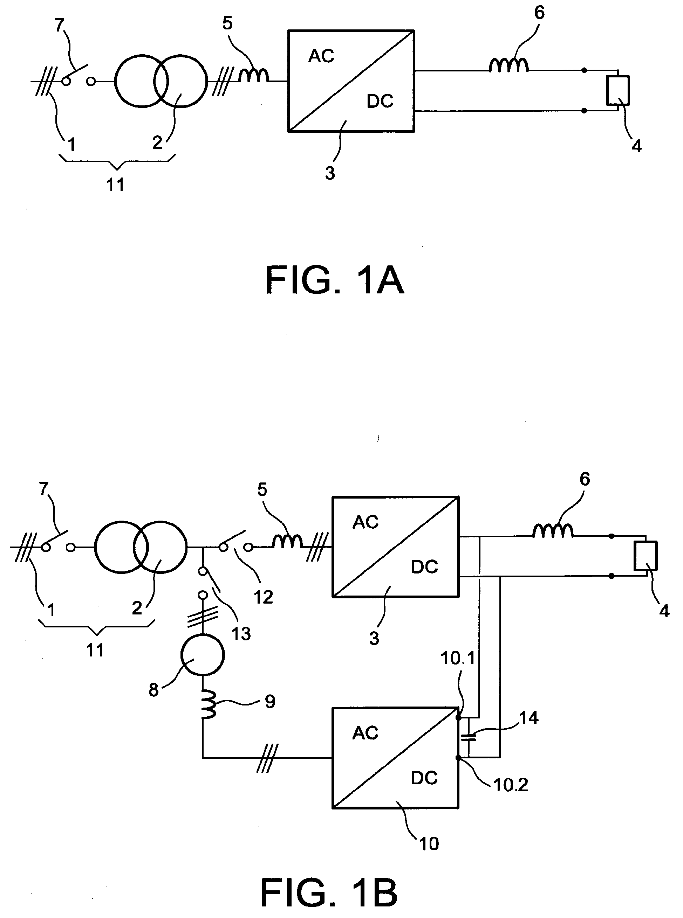

Il existe des dispositifs de conversion électrique AC/DC qui comportent un convertisseur AC/DC 3 à diodes ou à thyristors à relier entre une source de tension alternative 11 et un réseau à courant continu 4 schématisé par un rectangle. On se réfère à la figure 1A. La source de tension alternative peut être formée d'un réseau électrique alternatif 1 dont la tension est adaptée à l'aide d'un transformateur 2. Ce réseau électrique alternatif 1 est représenté comme triphasé sur la figure 1A. Ces dispositifs de conversion électrique nécessitent des dispositifs de filtrage 5, 6, généralement de type inductance, en amont et en aval du convertisseur AC/DC 3. L'ensemble est volumineux notamment à cause du filtrage. On doit également prévoir un interrupteur de protection 7 en amont du transformateur 2. De plus, ce dispositif de conversion électrique AC/DC n'est pas bidirectionnel à cause des diodes ou des thyristors qui se trouvent dans le convertisseur AC/DC 3. Le réseau à courant continu 4 est destiné à alimenter une sous-station d'alimentation (non représentée) et un véhicule ferroviaire tracteur tire son énergie de cette sous-station d'alimentation via une caténaire. Dans ce domaine notamment, il est intéressant de pouvoir récupérer de l'énergie lorsque le véhicule ferroviaire de traction freine. Encore un autre inconvénient est que ce dispositif de conversion électrique AC/DC ne peut limiter un courant de court-circuit provenant du réseau à courant continu branché côté continu et qu'en conséquence, le dispositif de conversion électrique risque d'être détérioré. De plus, le transformateur doit être surdimensionné en courant à cause de la présence des dispositifs de filtrage.

On connait également des dispositifs de conversion électrique AC/DC qui autorisent une récupération d'énergie. L'un d'entre eux est illustré sur la figure 1B.

Il comporte, comme dans le cas précédent, un convertisseur AC/DC 3 non réversible relié d'un côté au transformateur 2 et de l'autre au réseau à courant continu 4, mais également un convertisseur continu-alternatif DC/AC 10, également non réversible, monté en série avec un autotransformateur 8, l'ensemble étant monté en dérivation entre entrée et sortie du convertisseur AC/DC 3. On retrouve comme sur la figure 1A, les dispositifs de filtrage 5, 6 en amont et en aval du convertisseur AC/DC 3. On dispose en outre, un dispositif de filtrage supplémentaire 9 entre le convertisseur DC/AC 10 et l'autotransformateur 8. On place un condensateur 14 en parallèle avec les deux bornes d'entrée 10.1, 10.2 du convertisseur DC/AC 10. On prévoit également l'interrupteur de protection 7 entre le transformateur 2 et le réseau électrique alternatif 1 et deux interrupteurs supplémentaires 12, 13, l'un entre le transformateur 2 et le convertisseur AC/DC 3 et l'autre entre l'autotransformateur 8 et le transformateur 2.

Les inconvénients de ce dispositif sont le surdimensionnement du transformateur 2, le fait d'utiliser deux convertisseurs 3, 10 et la nécessité d'une commande complexe.

Les dispositifs de filtrage 5, 6, 9 absorbent de la puissance réactive, ce qui fait que le transformateur 2 doit être surdimensionné en courant. Cela entraine des contraintes sur le convertisseur DC/AC 10.

En conclusion, les deux dispositifs de conversion électrique illustrés aux figures 1A, 1B, souffrent du surdimensionnement du transformateur. Le dispositif de conversion électrique de la figure 1A n'est pas réversible. Celui illustré à la figure 1B est complexe en termes de commande et est cher à cause des deux convertisseurs. De plus, ces dispositifs de conversion électrique ne peuvent limiter les courants de court-circuit côté continu.

Les demandes de brevet US 2009/160248, GB 2 447 875 illustrent des dispositifs de conversion électrique AC/DC de l'art antérieur. La demande de brevet JP H02 461 164 montre un convertisseur DC/AC qui est apte à détecter un courant de court-circuit.

### EXPOSÉ DE L'INVENTION

La présente invention a justement comme but de proposer un dispositif de conversion électrique alternatif-continu (AC/DC) simplifié qui est apte à gérer les courts-circuits apparaissant côté continu.

Un autre but de l'invention est de proposer un dispositif de conversion électrique AC/DC à fonction de récupération d'énergie qui est plus compact que celui de l'art antérieur évoqué plus haut.

Encore un autre but de l'invention est de proposer un dispositif de conversion électrique AC/DC à fonction de récupération d'énergie qui permet un redressement avec un facteur de puissance proche de l'unité.

Un but supplémentaire de l'invention est de proposer un dispositif de conversion électrique AC/DC à fonction de récupération d'énergie qui génère moins d'harmoniques sur le courant de ligne du réseau et nécessite donc moins de dispositifs de filtrage que dans l'art antérieur.

Un but additionnel de la présente invention est de proposer un dispositif de conversion électrique AC/DC à fonction de récupération d'énergie dans lequel la tension continue délivrée en mode source d'énergie peut être régulée de manière active.

Encore un but additionnel est de fournir un dispositif de conversion électrique AC/DC à fonction de récupération d'énergie dans lequel le transformateur n'a pas besoin d'être surdimensionné.

Plus précisément, la présente invention concerne un dispositif de conversion électrique alternatif-continu, tel que défini dans la revendication 1. Il est destiné à être connecté, côté alternatif à une source de tension alternative et côté continu à un réseau à courant continu. Il comporte un convertisseur alternatif-continu, une cellule de commutation à deux interrupteurs bidirectionnels en courant ayant un point commun et une borne extrême, un étage de filtrage inductif, une unité de commande de la cellule de commutation, le convertisseur est destiné à être connecté, côté alternatif à la source de tension alternative et est connecté côté continu à la cellule de commutation, en utilisation, le premier interrupteur est monté entre le convertisseur et le réseau à courant continu via l'étage de filtrage, le second interrupteur formant un ensemble parallèle avec l'étage de filtrage et le réseau à courant continu, en mode source d'énergie, en l'absence de court-circuit côté réseau à courant continu, l'unité de commande maintient bloqué le second interrupteur et commande le premier interrupteur pour le rendre alternativement passant ou bloqué, afin d'autoriser une circulation de courant du convertisseur vers le réseau à courant continu via le premier interrupteur et l'étage de filtrage et en présence d'un court-circuit, bloque le premier interrupteur et laisse la circulation d'un courant de court-circuit se faire du réseau à courant continu vers l'étage de filtrage via le second interrupteur.

Les premier et second interrupteurs de la cellule de commutation comportent avantageusement chacun un couple de composants électroniques montés en antiparallèle, l'un étant à commutation commandée et l'autre à commutation naturelle.

La circulation du courant de court-circuit se fait via le composant électronique à commutation naturelle du second interrupteur, c'est une circulation en roue libre.

Le composant électronique à commutation commandée peut être un transistor bipolaire, un transistor MOS, un transistor IGBT, un thyristor, un thyristor GTO, un thyristor IGCT, et le composant électronique à commutation naturelle peut être une diode.

Le dispositif de conversion électrique comporte en outre un capteur de courant placé entre le point commun et l'étage de filtrage, et relié à l'unité de commande, ce capteur de courant est destiné à détecter une augmentation au-dessus d'un seuil d'un courant circulant du premier interrupteur vers l'étage de filtrage, cette augmentation du courant traduisant l'apparition du court-circuit.

Il est préférable de prévoir en outre un condensateur destiné à être monté en parallèle avec le réseau à courant continu pour assurer un lissage de la tension aux bornes du réseau à courant continu.

Lorsque, en mode de récupération d'énergie, la tension aux bornes du dispositif de conversion électrique côté continu, est supérieure à la tension aux bornes du convertisseur côté continu, l'unité de commande bloque le second interrupteur permettant la circulation d'un courant de récupération de l'étage de filtrage vers le convertisseur en passant par le premier interrupteur.

La circulation du courant de récupération se fait dans le composant électronique à commutation naturelle du premier interrupteur.

Lorsque en mode de récupération d'énergie, la tension aux bornes du dispositif de conversion électrique côté continu, est inférieure à la tension aux bornes du convertisseur côté continu, l'unité de commande commande le second interrupteur pour le rendre alternativement passant ou bloqué, afin d'autoriser lorsqu'il est passant, une accumulation d'énergie dans l'étage de filtrage et lorsqu'il est bloqué, une libération de cette énergie sous la forme d'un courant de récupération circulant vers le convertisseur via le premier interrupteur.

La circulation du courant de récupération se fait dans le composant électronique à commutation naturelle du premier interrupteur.

Le dispositif de conversion électrique peut comporter en outre un dispositif de stockage d'énergie branché aux bornes extrêmes de la cellule de commutation. Ainsi, le courant de récupération est stocké dans le dispositif de stockage d'énergie et n'atteint pas la source de tension alternative. Le convertisseur n'a pas besoin d'être réversible.

Dans le même but, en variante, le dispositif de conversion électrique peut comporter, en outre, une seconde cellule de commutation, avec un premier et un second interrupteur bidirectionnel en courant, montés en série et définissant des bornes extrêmes reliées aux bornes extrêmes de la première cellule de commutation et un point commun, un second étage de filtrage inductif et un dispositif de stockage d'énergie formant un ensemble série monté entre le point commun et la borne extrême du second interrupteur de la seconde cellule de commutation.

La présente invention concerne également un procédé de commande d'un dispositif de conversion électrique alternatif-continu apte à fonctionner en mode source d'énergie ou récupération d'énergie, tel que défini dans la revendication 12. Le dispositif de conversion électrique est destiné à être connecté, côté alternatif à une source de tension alternative et côté continu à un réseau à courant continu, comportant un convertisseur alternatif-continu, une cellule de commutation à deux interrupteurs bidirectionnels en courant ayant un point commun et une borne extrême, un étage de filtrage inductif, le convertisseur étant destiné à être connecté, côté alternatif à la source de tension alternative et étant connecté côté continu à la cellule de commutation, en utilisation, le premier interrupteur est monté entre le convertisseur et le réseau à courant continu via l'étage de filtrage, le second interrupteur formant un ensemble parallèle avec l'étage de filtrage et le réseau à courant continu.

Le procédé comporte, en mode source d'énergie, en l'absence de court-circuit côté réseau à courant continu, une étape de blocage du second interrupteur et de commande du premier interrupteur pour le rendre alternativement passant ou bloqué, afin d'autoriser une circulation de courant du convertisseur vers le réseau à courant continu via le premier interrupteur et l'étage de filtrage et en présence d'un court-circuit, une étape de blocage du premier interrupteur et d'écoulement d'un courant de court-circuit du réseau à courant continu vers l'étage de filtrage via le second interrupteur.

Le procédé peut comporter, dans une première situation, en mode de récupération d'énergie, lorsque une tension aux bornes du dispositif de conversion électrique côté continu est supérieure à une tension aux bornes du convertisseur côté continu, une étape de blocage du second interrupteur permettant la circulation d'un courant de récupération de l'étage de filtrage vers le convertisseur en passant par le premier interrupteur.

Dans une autre situation, en mode de récupération d'énergie, lorsqu'une tension aux bornes du dispositif de conversion électrique côté continu est inférieure à une tension aux bornes du convertisseur côté continu, une étape de commande du second interrupteur pour le rendre alternativement passant ou bloqué, et lorsqu'il est passant, une étape d'accumulation d'énergie dans l'étage de filtrage et lorsqu'il est bloqué, une étape de libération de cette énergie sous la forme d'un courant de récupération circulant vers le convertisseur via le premier interrupteur.

On peut régler la durée et l'amplitude du courant de court-circuit en appliquant une modulation de largeur d'impulsion au premier interrupteur.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
les figures 1A, 1B illustrent des dispositifs de conversion électrique AC/DC de l'art antérieur, seul celui de la figure 1B étant réversible;
les figures 2A, 2B, 2C illustrent respectivement un exemple de dispositif de conversion électrique AC/DC objet de l'invention, un schéma électrique d'un exemple de convertisseur AC/DC triphasé et réversible, et un schéma électrique d'un exemple du convertisseur AC/DC monophasé et non réversible;
les figures 3A, 3B illustrent dans le dispositif de conversion électrique AC/DC de la figure 2A, les sens de circulation des courants en mode source d'énergie en fonctionnement normal ou en présence d'un court-circuit côté réseau à courant continu, et en mode récupération d'énergie, selon la valeur de la tension aux bornes du réseau à courant continu par rapport à celle aux bornes du convertisseur côté continu;
les figures 4A, 4B illustrent deux variantes de dispositifs de conversion électrique AC/DC objet de l'invention, dans lesquelles la récupération d'énergie se fait dans un dispositif de stockage d'énergie sans passer par le convertisseur AC/DC.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Des structures bien connues ne sont pas représentées en détail afin de ne pas alourdir inutilement la description de la présente invention.

### EXPOSÉ DÉTAILLÉ DE MODES DE RÉALISATION PARTICULIERS

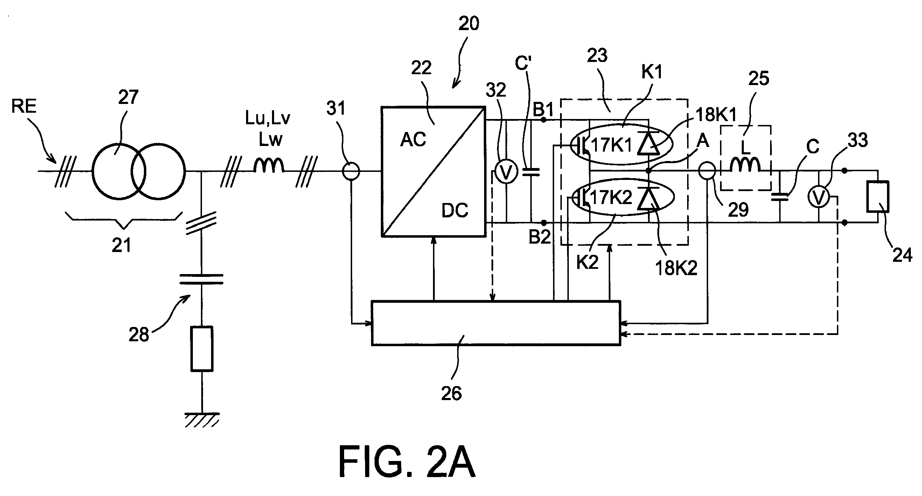

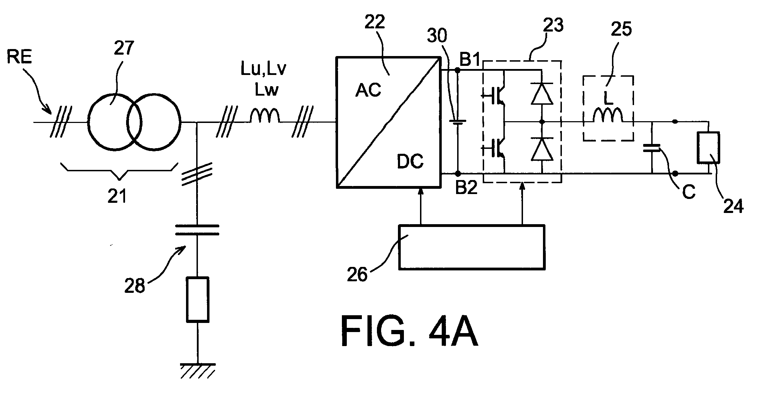

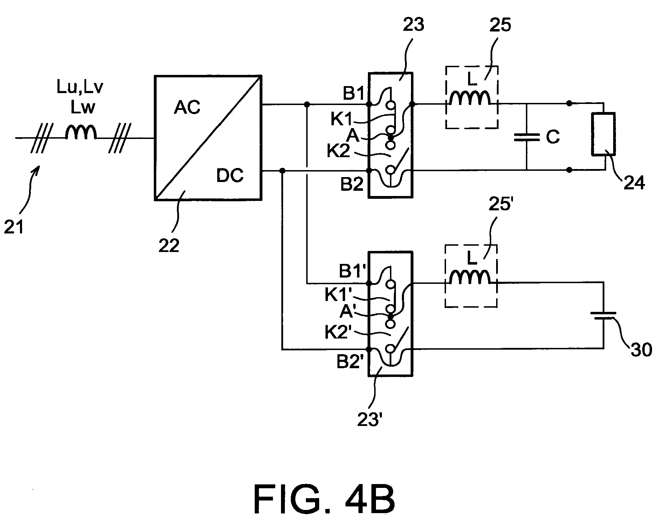

On va se référer à la figure 2A qui montre un dispositif de conversion électrique AC/DC conforme à l'invention. Ce dispositif de conversion électrique AC/DC 20 est destiné à être branché entre une source de tension alternative 21 et un réseau à courant continu 24 assimilable à une source de courant continu. Comme on l'a évoqué plus haut le dispositif de conversion électrique AC/DC 20 conforme à l'invention autorise une récupération d'énergie. Il peut fonctionner dans deux modes distincts, un mode de source d'énergie et un mode de récupération d'énergie. Dans le mode source d'énergie, de l'énergie peut circuler de la source de tension alternative 21 vers le réseau à courant continu 24, lorsque le réseau à courant continu 24 est consommateur d'énergie, par exemple lorsque le réseau à courant continu alimente une sous-station d'alimentation destinée à alimenter en courant continu un véhicule tracteur ferroviaire en phase d'accélération via une caténaire (la caténaire et le véhicule ferroviaire tracteur ne sont pas représentés). Le réseau à courant continu 24 peut dans certains cas restituer de l'énergie vers la source de tension alternative 21 via le dispositif de conversion électrique AC/DC 20. En variante illustrée sur les figures 4A, 4B, le réseau à courant continu 24 peut restituer de l'énergie vers un dispositif de stockage d'énergie via seulement une portion du dispositif de conversion électrique AC/DC 20. Ces restitutions ont lieu lorsque le véhicule ferroviaire tracteur est en phase de freinage. C'est le mode récupération d'énergie.

Sur la figure 2A, la source de tension alternative 21 est représentée comme multiphasée et plus particulièrement triphasée. Elle peut comprendre un réseau électrique triphasé RE associé à un transformateur 27. Le dispositif de conversion électrique AC/DC 20 objet de l'invention comporte un convertisseur alternatif-continu (AC/DC) 22, une cellule de commutation 23 et son unité de commande 26 et un étage de filtrage inductif 25. Le convertisseur alternatif-continu (AC/DC) 22 est destiné à être connecté d'un côté à la source de tension alternative 21 et de l'autre est connecté à la cellule de commutation 23. Le convertisseur AC/DC 22 peut être réversible ou non réversible. Un condensateur C' est monté aux bornes du convertisseur AC/DC 22 côté continu.

La cellule de commutation 23 comporte deux interrupteurs K1, K2 bidirectionnels en courant et unidirectionnels en tension montés en série. On suppose que dans l'exemple des figures 2A le convertisseur AC/DC 22 est réversible, la récupération d'énergie pouvant se faire entre le réseau à courant continu 24 et la source de tension alternative 21.

Chaque interrupteur K1, K2 peut être soit dans un état passant, soit dans un état bloqué, en fonction d'un signal qu'il reçoit de l'unité de commande 26. Ces deux interrupteurs K1, K2 ne sont pas simultanément passants sinon le convertisseur AC/DC 22 serait court-circuité.

Lors d'un court-circuit côté réseau à courant continu, l'interrupteur K1 est bloqué et l'interrupteur K2 est passant pour un courant inverse de telle sorte que le courant de court-circuit s'écoule du réseau à courant continu vers l'étage de filtrage via l'interrupteur K2. On décrira plus en détails les interrupteurs ultérieurement.

Les deux interrupteurs K1, K2 sont reliés d'un côté à un point commun A et de l'autre côté forment des bornes extrêmes B1, B2 de la cellule de commutation 23. Ces bornes extrêmes B1, B2 sont reliées au convertisseur AC/DC, côté continu. Un premier des interrupteurs, celui référencé K1, est destiné à être monté en série entre le convertisseur 22 et le réseau à courant continu 24 via l'étage de filtrage 25. L'étage de filtrage 25 est relié d'un côté au point commun A et est destiné à être relié de l'autre au réseau à courant continu 24.

Le second interrupteur K2 est monté en parallèle avec l'ensemble formé de l'étage de filtrage 25 et du réseau à courant continu 24 lorsqu'ils sont reliés ensemble. Le réseau à courant continu 24 est alors branché entre l'étage de filtrage 25 et la borne extrême B2. Le second interrupteur K2 assure une continuité du courant dans le réseau à courant continu 24 lorsque le premier interrupteur K1 est bloqué.

Chaque interrupteur K1, K2 puisqu'il est bidirectionnel en courant comporte un composant électronique à commutation commandée 17K1, 17K2 et un composant électronique à commutation naturelle 18K1, 18K2 montés en antiparallèle. Le composant à commutation commandée 17K1, 17K2 peut être un transistor bipolaire, un transistor MOS, un transistor IGBT (insulated gâte bipolar transistor soit transistor bipolaire à grille isolée), un thyristor IGCT (integrated gate-commutated thyristor), un thyristor, un thyristor GTO (gate turn off, soit thyristor dont l'ouverture est commandée par la gâchette). Le choix dépend notamment de la puissance mise en jeu et des performances en rapidité souhaitées.

Le composant électronique à commutation naturelle 18K1, 18K2 est représenté comme une diode.

Chaque interrupteur K1 ou K2 est passant pour un courant direct, lorsque son composant électronique à commutation commandée est passant et laisse passer ce courant. Il est passant pour un courant inverse en roue libre alors que son composant électronique à commutation commandée est bloqué et que son composant électronique à commutation naturelle laisse passer ce courant inverse.

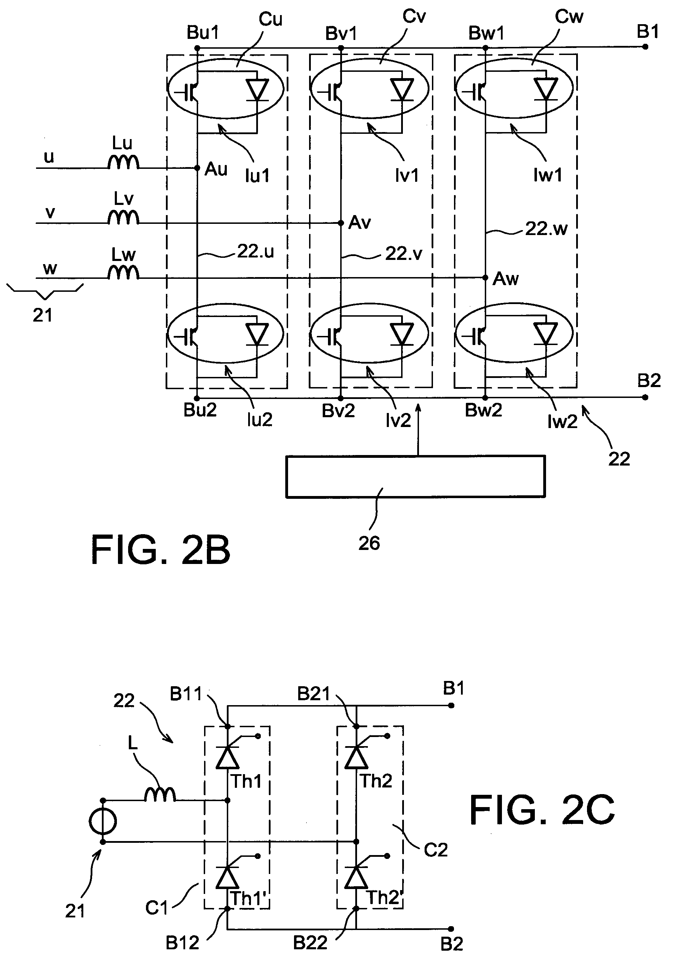

On se réfère à la figure 2B. Le convertisseur AC/DC 22 peut être réalisé par un convertisseur conventionnel de type pont de Graëtz avec trois bras 22.u, 22.v, 22.w respectivement associés chacun à une phase u, v, w de la source de tension alternative 21. Le transformateur n'est pas visible sur la figure 2B. Sur chaque bras 22.u, 22.v, 22.w est montée une unité de commutation Cu, Cv, Cw comportant deux bornes extrêmes Bu1, Bu2, Bv1, Bv2, Bw1, Bw2, l'une reliée à la borne B1 donc au premier interrupteur K1 et l'autre à la borne B2 donc au second interrupteur K2 et une borne Au, Av, Aw milieu reliée à la phase u, v, w associée.

Dans le mode de réalisation de la figure 2A, on suppose que le dispositif de conversion électrique AC/DC 20 est réversible, de l'énergie pouvant se propager de la source de tension alternative 21 vers le réseau à courant continu 24 et vice-versa. Le convertisseur AC/DC 22 de la figure 2B est aussi réversible et possède en plus d'un mode redresseur pour alimenter le réseau à courant continu 24, un mode onduleur pour alimenter avec une tension alternative la source de tension alternative 21. Dans ce cas, chaque unité de commutation Cu, Cv, Cw est bidirectionnelle en courant et comporte deux interrupteurs Iu1, Iu2, Iv1, Iv2, Iw1, Iw2 montés en série et fonctionnant en opposition chacun permettant d'interrompre ou d'établir le courant entre l'une des bornes extrêmes Bu1 ou Bu2, Bv1 ou Bv2, Bw1 ou Bw2, et la borne milieu Au, Av, Aw. Chaque interrupteur Iu2, Iv1, Iv2, Iw1, Iw2 peut comporter un composant électronique à commutation commandée et un composant électronique à commutation naturelle montés en antiparallèle.

Le composant électronique à commutation commandée peut être un transistor bipolaire, un transistor MOS, un transistor IGBT, un thyristor IGCT, un thyristor, un thyristor GTO. Le composant électronique à commutation naturelle peut être une diode. Sur la figure 2B, les composants électroniques à commutation commandée et à commutation naturelle ne sont pas référencés, mais ils sont parfaitement visibles. Les composants électroniques à commutation commandée sont commandés par l'unité de commande 26.

Sur la figure 2C, on a juste représenté un convertisseur AC/DC 22 qui est monophasé et non réversible. Il ne possède que deux bras 22.1, 22.2 reliés chacun à une borne de la source de tension alternative 21.

Sur chaque bras 22.1, 22.2 est montée une unité de commutation C1, C2 comportant deux bornes extrêmes B11, B12, B21, B22, l'une reliée directement à la borne B1 donc au premier interrupteur K1 et l'autre à la borne B2 donc au second interrupteur K2 et une borne A11, A22 milieu reliée l'une à l'une des bornes de la source alternative 21 et l'autre à l'autre borne de la source alternative 21.

Chaque unité de commutation C1, C2 est unidirectionnelle en courant et comporte deux interrupteurs Th1, Th1', Th2, Th2' montés en série et fonctionnant en opposition chacun permettant d'interrompre ou d'établir le courant entre l'une des bornes extrêmes B11 ou B12, B21 ou B22 et la borne milieu A11, A22. Chaque interrupteur Th1, Th1', Th2, Th2' comporte un unique composant électronique à commutation commandée. Le composant électronique à commutation commandée Th1, Th1', Th2, Th2' peut être un transistor bipolaire, un transistor MOS, un transistor IGBT, un transistor IGCT, un thyristor, un thyristor GTO. On a représenté les composants électroniques à commutation commandée Th1, Th1', Th2, Th2' comme des thyristors. Sur cette figure 2C, on n'a pas représenté l'unité de commande des composants électroniques à commutation commandée. Il est bien entendu que sur la figure 2C, les composants électroniques à commutation commandée auraient pu être remplacés par des composants électroniques à commutation naturelle.

Il est bien entendu que les deux représentations du convertisseur AC/DC 22 ne sont pas limitatives, le convertisseur AC/DC pourrait être multiphasé et non réversible ou bien monophasé et réversible. Lorsqu'il est multiphasé, il pourrait avoir plus de trois phases.

Le dispositif de conversion électrique AC/DC objet de l'invention comporte, en outre, un étage de filtrage 25 du côté continu comme on l'a déjà annoncé. Cet étage de filtrage 25 comporte une inductance de lissage L montée entre le point commun A et le réseau à courant continu 24. On sait qu'une telle inductance s'oppose à toute variation rapide du courant qui la traverse. Il est possible de disposer en outre un condensateur de liaison C en parallèle avec le réseau à courant continu 24, monté entre l'étage de filtrage 25 et le second interrupteur K2, au niveau de la borne B2. On donne à l'inductance L et au condensateur C des valeurs qui dépendent des performances désirées pour l'application en question.

Côté alternatif, sur la figure 2A, on suppose que la source de tension alternative 21 est un réseau électrique RE triphasé dont il faut adapter la tension, dans le mode source d'énergie du dispositif de conversion électrique, pour cela on a prévu un transformateur triphasé 27 branché entre le réseau électrique RE et le convertisseur AC/DC 22. Ce transformateur 27 a également un rôle d'isolation galvanique.

On prévoit également côté alternatif, une inductance de lissage Lu, Lv, Lw par phase dans la configuration multiphasée et une seule inductance L' dans la configuration monophasée. Chaque inductance de lissage est montée entre le secondaire du transformateur 27 et le convertisseur AC/DC 22. Ces caractéristiques correspondent au mode source d'énergie.

On prévoit également un étage de filtrage de type R, C 28 en parallèle avec le transformateur 27 pour filtrer des harmoniques apparaissant au niveau du secondaire du transformateur 27, dans le mode source d'énergie.

L'unité de commande 26 est prévue pour commander à la fois la cellule de commutation 23 et le convertisseur AC/DC 22 si celui-ci comporte des composants électroniques à commutation commandée. L'unité de commande 26 peut appliquer une modulation de largeur d'impulsions MLI pour rendre passants ou bloqués les composants électroniques à commutation commandée de la cellule de commutation 22 et des composants électroniques à commutation commandée du convertisseur AC/DC 22. On peut alors, en réglant cette modulation, réguler à volonté la tension en sortie du dispositif de conversion électrique 20 côté réseau à courant continu en mode source d'énergie.

Un capteur de courant 29 est disposé entre le point commun A et l'étage de filtrage 25, ce capteur de courant 29 étant relié à l'unité de commande 26. On va expliquer plus loin sa fonction. Un capteur de courant référencé 31 est placé entre chaque inductance de lissage Lu, Lv, Lw et le convertisseur AC/DC côté alternatif. Des capteurs de tension sont placés d'une part aux bornes du convertisseur AC/DC 22 côté continu et d'autre part aux bornes du dispositif de conversion électrique 20 côté courant continu. Ces capteurs de tension sont référencés respectivement 32 et 33.

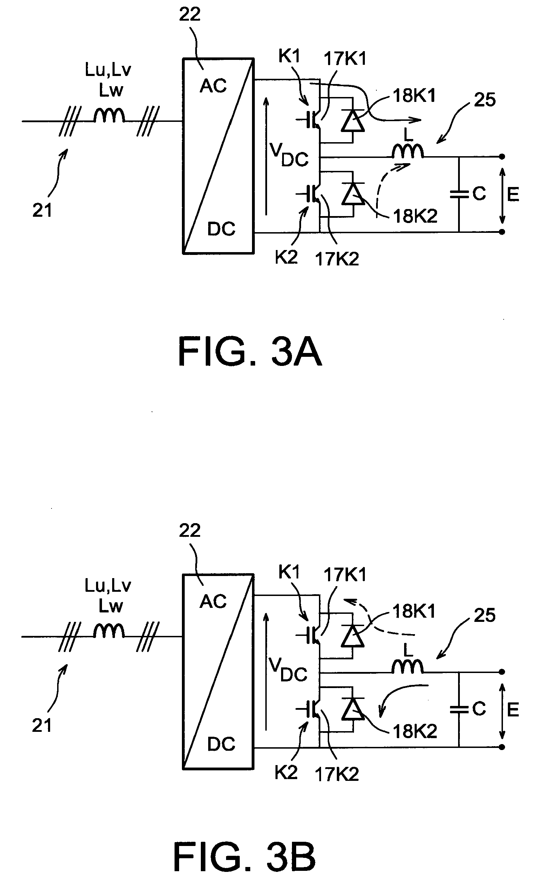

On va maintenant se référer aux figures 3A, 3B qui montrent les sens de circulation de courant dans la cellule de commutation 23, selon que le dispositif de conversion électrique AC/DC, objet de l'invention, fonctionne en mode source d'énergie ou en mode récupération d'énergie. On va également s'attarder sur le fonctionnement en mode source d'énergie, lorsqu'un qu'un court-circuit apparaît côté réseau à courant continu 24 et décrire des procédés de commande du dispositif de conversion électrique selon l'invention. Dans l'application ferroviaire, ce court-circuit s'établirait entre la caténaire et la terre.

En mode source d'énergie, le convertisseur AC/DC 22 est passant, il redresse un courant alternatif délivré par la source de tension alternative 21. Lors d'un fonctionnement normal sans défaut, le second interrupteur K2 est bloqué pour un courant direct issu du convertisseur AC/DC 22, c'est-à-dire que son composant électronique à commutation commandée 17K2 est bloqué et seul le composant électronique à commutation commandée 17K1 piloté par l'unité de commande 26 peut conduire ce courant direct. Lorsque le commutateur à commutation commandée 17K1 conduit, il est traversé par ce courant continu direct, redressé délivré par le convertisseur AC/DC 22. Ce courant direct ne peut traverser le second interrupteur K2 puisque son composant électronique à commutation commandée 17K2 est bloqué. Ce courant est destiné à alimenter le réseau à courant continu 24 via l'étage de filtrage 25. La valeur de la tension aux bornes du réseau à courant continu 24 dépend de la tension aux bornes de la cellule de commutation 23 et de la commande du composant électronique à commutation commandée 17K1. Ce composant peut être commandé par modulation de largeur d'impulsion MLI grâce à l'unité de commande 26. La circulation de ce courant est illustrée par la flèche en trait plein qui traverse l'étage de filtrage 25 de la figure 3A.

Lorsque le capteur de courant 29 détecte une augmentation du courant absorbé par le réseau à courant continu qui fait que sa valeur devient supérieure à un seuil, l'unité de commande 26 bloque le premier interrupteur K1, c'est-à-dire bloque son composant électronique à commutation commandée 17K1 ainsi que le convertisseur AC/DC dans la mesure où ce dernier comporte des composants électroniques à commutation commandée. Si le convertisseur AC/DC 22 ne comporte pas de composants à commutation commandée, il fournit de l'énergie au condensateur C'. Ce condensateur n'a pas été représenté sur les figures 3A, 3B pour ne pas surcharger les figures.

Cela signifie qu'un court-circuit s'est produit côté réseau à courant continu 24.

Au niveau du second interrupteur K2, son composant électronique à commutation commandée 17K2 est aussi maintenu bloqué pour un courant direct, mais son composant électronique à commutation naturelle 18K2 est passant pour un courant inverse en roue libre. Il est alors parcouru par un courant de court-circuit, ce courant de court-circuit traverse l'étage de filtrage 25 vers le réseau à courant continu 24. On peut se référer à la flèche en pointillés de la figure 3A. La cellule de commutation 23 fonctionne en abaisseur de tension.

Il est possible de régler l'amplitude et la durée du courant de court-circuit en commandant la conduction du premier interrupteur K1 avec des paquets d'impulsions avec une modulation de largeur d'impulsion. On peut travailler dans un mode abaisseur. Dans le domaine ferroviaire, on peut être amené à entretenir le courant de court-circuit pendant un temps désiré, par exemple de l'ordre de la centaine de millisecondes.

En mode de récupération d'énergie, si la tension E aux bornes du dispositif de conversion électrique 20 côté continu est supérieure à la tension V_{DC} aux bornes du convertisseur AC/DC 22 côté continu, l'unité de commande 26 bloque le second interrupteur K2 via son composant électronique à commutation commandée 17K2 pour un courant direct. Le premier interrupteur K1 est passant pour un courant inverse en roue libre mais son composant électronique à commutation commandée 17K1 est bloqué. Un courant de récupération s'écoule de l'étage de filtrage 25 vers le convertisseur AC/DC 22 en passant par le composant électronique à commutation naturelle 18K1 du premier interrupteur K1 Ce courant de récupération est un courant inverse. Le trajet du courant de récupération est matérialisé par la flèche en pointillés sur la figure 3B. Le convertisseur AC/DC peut fonctionner en onduleur transformant le courant continu en courant alternatif.

Toujours en mode de récupération d'énergie, si la tension E aux bornes du dispositif de conversion électrique 20 côté continu est inférieure à la tension V_{DC} aux bornes du convertisseur AC/DC 22 côté continu, l'unité de commande 26 pilote, par exemple en lui appliquant une modulation MLI, le second interrupteur K2 et donc son composant électronique à commutation commandée 17K2 pour le mettre alternativement dans un état passant et dans un état bloqué pour un courant direct. Lorsque le second interrupteur K2 est passant, son composant électronique à commutation commandée 17K2 étant passant, le courant de récupération provenant du réseau à courant continu 24 via l'étage de filtrage 25 le traverse et de l'énergie s'accumule dans l'inductance L de l'étage de filtrage 25. Lorsque second interrupteur K2 est bloqué pour un courant direct, son composant électronique à commutation commandée 17K2 étant bloqué, cette énergie est libérée sous la forme d'un courant de récupération en roue libre circulant vers le convertisseur AC/DC 22 via le premier interrupteur K1 de la cellule de commutation 23, et plus particulièrement, via son composant électronique à commutation naturelle 18K1. Son composant électronique à commutation commandée 17K1 est bloqué. La cellule de commutation 23 fonctionne en élévateur de tension. Le convertisseur AC/DC peut être passant et fonctionner en onduleur.

Il y a restitution d'énergie à la source de tension alternative 21 et le convertisseur AC/DC 22 adapte la phase du courant à restituer à celle de la tension de la source de tension alternative 21.

Avec un tel dispositif de conversion électrique AC/DC à récupération d'énergie, on obtient un facteur de puissance proche de l'unité à cause de la présence de la cellule de commutation 23 entre le convertisseur AC/DC 22 et le réseau à courant continu 24.

Par rapport à configuration de la figure 1B, on a réduit le nombre de dispositifs de filtrage à inductance. En conséquence, on n'est plus obligé de surdimensionner le transformateur, comme c'était le cas dans l'art antérieur.

Avec un tel dispositif de conversion, on réduit les pertes globales par rapport au dispositif de conversion de la figure 1B tout en assurant la gestion des courts-circuits.

On va maintenant s'intéresser maintenant à deux autres modes de réalisation dans lesquels le convertisseur AC/DC 22 n'a pas besoin d'être réversible puisqu'il n'est pas concerné par la récupération d'énergie. Seule la cellule de commutation 23 est réversible. On se réfère à la figure 4A.

Sur cette figure 4A, on dispose des moyens de stockage d'énergie 30 branchés aux bornes extrêmes B1, B2 de la cellule de commutation 23. Ces moyens de stockage d'énergie 30 peuvent être une batterie d'accumulateurs ou une série de condensateurs ayant une grande capacité stockage tels que des supercondensateurs.

Le stockage se fait, dans ce mode de récupération d'énergie, en amont du convertisseur AC/DC, sans passer par lui et donc sans atteindre le réseau RE. Dans ce cas, le convertisseur AC/DC peut ne pas être réversible et dans l'hypothèse où il est réversible, l'unité de commande 26 commande son blocage.

Sur la figure 4B, le dispositif de conversion électrique comporte en outre une seconde cellule de commutation 23', similaire à la première, dont les bornes extrêmes B1', B2' sont reliées aux bornes extrêmes B1, B2 de la première cellule de commutation 23. Il n'y a pas de changement pour le branchement du réseau à courant continu 24.

Les interrupteurs bidirectionnels de la seconde cellule de commutation 23' sont référencés K1' et K2'. Ils sont similaires à ceux de la première cellule de commutation avec un composant électronique à commutation commandée et un composant électronique à commutation naturelle.

Le point milieu entre les deux interrupteurs est appelé A'. Les moyens de stockage d'énergie 30 sont connectés entre le point milieu A' et la borne extrême B2' de la seconde cellule de commutation 23' via un étage de filtrage inductif 25'. L'étage de filtrage 25' est monté entre le point milieu A' et les moyens de stockage d'énergie 30.

L'unité de commande 26 peut être commune aux deux cellules de commutation 23, 23', mais ce n'est pas une obligation, chacune des cellules pouvant avoir son unité de commande propre. La figure 4B ne montre pas d'unité de commande dans un souci de simplification.

En mode de récupération d'énergie, la première cellule de commutation 23 fonctionne comme on l'a décrit précédemment en liaison avec la figure 3B et la seconde cellule de commutation 23' fonctionne en mode source d'énergie avec de l'énergie de récupération issue de la première cellule de commutation 23. Cette énergie circule dans la seconde cellule de commutation 23' via le composant électronique à commutation commandée du premier interrupteur K1' lorsqu'il est passant vers les moyens de stockage d'énergie 30. Le second interrupteur K2' est bloqué ce qui signifie que son composant électronique à commutation commandée 17K2' est bloqué. Dans cette configuration également en mode de récupération d'énergie, le convertisseur AC/DC 22 peut ne pas être réversible et s'il l'est, le dispositif de commande 26 le maintient bloqué.

Un avantage de la configuration de la figure 4B par rapport à celle de la figure 2B est qu'en mode de récupération d'énergie, on n'envoie pas d'énergie dans le réseau électrique alternatif 21. On la stocke dans les moyens de stockage d'énergie 30. En effet cette injection d'énergie dans le réseau électrique alternatif pose problème. Dans l'application ferroviaire, le réseau électrique alternatif appartient à une autre entité que celle à qui appartient le réseau à courant continu. Il faut une autorisation et négocier le rachat de cette énergie.

Bien que plusieurs modes de réalisation du dispositif de conversion électrique alternatif-continu apte à fonctionner en mode source d'énergie ou en mode récupération d'énergie aient été représentés et décrits de façon détaillée, on comprendra que différents changements et modifications puissent être apportés sans sortir du cadre de l'invention définie par les revendications annexées.

## Revendications

1. Dispositif de conversion électrique alternatif-continu, destiné à être connecté, côté alternatif à une source de tension (21) alternative et côté continu à un réseau à courant continu (24), comportant un convertisseur alternatif-continu (22), une cellule de commutation (23) à deux interrupteurs (K1, K2) bidirectionnels en courant ayant un point commun (A) et une borne extrême B1, B2), un étage de filtrage inductif (25), une unité de commande (26) de la cellule de commutation, le convertisseur (22) étant destiné à être connecté, côté alternatif à la source de tension alternative (21) et est connecté côté continu à la cellule de commutation (23), en utilisation, le premier interrupteur (K1) est monté entre le convertisseur (22) et le réseau à courant continu (24) via l'étage de filtrage (25), le second interrupteur (K2) formant un ensemble parallèle avec l'étage de filtrage (25) et le réseau à courant continu (24), en mode source d'énergie, en l'absence de court-circuit côté réseau à courant continu, l'unité de commande (26) maintient bloqué le second interrupteur (K2) et commande le premier interrupteur (K1) pour le rendre alternativement passant ou bloqué, afin d'autoriser une circulation de courant du convertisseur (22) vers le réseau à courant continu (24) via le premier interrupteur (K1) et l'étage de filtrage (25), **caractérisé en ce qu'**il comporte en outre un capteur de courant (29) placé entre le point commun (A) et l'étage de filtrage (25), et relié à l'unité de commande (26), destiné à détecter une augmentation au-dessus d'un seuil d'un courant circulant du premier interrupteur (K1) vers l'étage de filtrage (25), cette augmentation du courant traduisant l'apparition du court-circuit, et **en ce que** l'unité de commande en présence d' un court-circuit, bloque le premier interrupteur (K1) et laisse la circulation d'un courant de court-circuit se faire du réseau à courant continu (24) vers l'étage de filtrage (25) via le second interrupteur (K2) et règle l'amplitude et la durée du courant de court-circuit en commandant la conduction du premier interrupteur (K1) par modulation de largeur d'impulsion.

2. Dispositif de conversion électrique selon la revendication 2, dans lequel les premier et second interrupteurs (K1, K2) de la cellule de commutation (23) comportent chacun un couple de composants électroniques (17K1, 18K1; 17K2, 18K2) montés en antiparallèle, l'un étant à commutation commandée et l'autre à commutation naturelle.

3. Dispositif de conversion électrique selon la revendication 2, dans lequel la circulation du courant de court-circuit se fait via le composant électronique à commutation naturelle (18K2) du second interrupteur (K2).

4. Dispositif de conversion électrique selon l'une des revendications 2 ou 3, dans lequel le composant électronique à commutation commandée (17K1, 17K2) est un transistor bipolaire, un transistor MOS, un transistor IGBT, un thyristor, un thyristor GTO, un thyristor IGCT, et le composant électronique à commutation naturelle (18K1, 18K2) est une diode.

5. Dispositif de conversion électrique selon l'une des revendications 1 à 4, comportant en outre un condensateur (C) destiné à être monté en parallèle avec le réseau à courant continu (24).

6. Dispositif de conversion électrique selon l'une des revendications précédentes, dans lequel en mode de récupération d'énergie, lorsque une tension (E) aux bornes du dispositif de conversion électrique (20) côté continu est supérieure à une tension (V_{DC}) aux bornes du convertisseur (22) côté continu, l'unité de commande (26) bloque le second interrupteur (K2) permettant la circulation d'un courant de récupération de l'étage de filtrage (25) vers le convertisseur (22) en passant par le premier interrupteur (K1).

7. Dispositif de conversion électrique selon la revendication 6, dans lequel la circulation du courant de récupération se fait dans le composant électronique à commutation naturelle (18K1) du premier interrupteur (K1).

8. Dispositif de conversion électrique selon l'une des revendications 1 à 5, dans lequel en mode de récupération d'énergie, lorsqu'une tension (E) aux bornes du dispositif de conversion électrique (20) côté continu est inférieure à une tension (V_{DC}) aux bornes du convertisseur (22) côté continu, l'unité de commande (26) commande le second interrupteur (K2) pour le rendre alternativement passant ou bloqué, afin d'autoriser lorsqu'il est passant, une accumulation d'énergie dans l'étage de filtrage (25) et lorsqu'il est bloqué une libération de cette énergie sous la forme d'un courant de récupération circulant vers le convertisseur (22) via le premier interrupteur (K1).

9. Dispositif de conversion électrique selon la revendication 8, dans lequel la circulation du courant de récupération se fait dans le composant électronique à commutation naturelle (18K1) du premier interrupteur (K1).

10. Dispositif de conversion électrique selon l'une des revendications 1 à 9, comportant en outre des moyens de stockage d'énergie (30) branchés aux bornes extrêmes (B1, B2) de la cellule de commutation (23).

11. Dispositif de conversion électrique selon l'une des revendications 1 à 9, dans lequel la cellule de commutation (23) est dite première cellule de commutation, le dispositif de conversion électrique comportant en outre une seconde cellule de commutation (23'), avec un premier et un second interrupteur bidirectionnel (K1', K2') en courant montés en série et définissant des bornes extrêmes (B1', B2') reliées aux bornes extrêmes (B1, B2) de la première cellule de commutation (23) et un point commun (A'), un second étage de filtrage inductif (25') et des moyens de stockage d'énergie (30) formant un ensemble série monté entre le point commun (A') et la borne extrême (B2') du second interrupteur (K2') de la seconde cellule de commutation (23').

12. Procédé de commande d'un dispositif de conversion électrique alternatif-continu apte à fonctionner en mode source d'énergie ou récupération d'énergie, destiné à être connecté, côté alternatif à une source de tension (21) alternative et côté continu à un réseau à courant continu (24), comportant un convertisseur alternatif-continu (22), une cellule de commutation (23) à deux interrupteurs (K1, K2) bidirectionnels en courant ayant un point commun (A) et une borne extrême (B1, B2), un étage de filtrage inductif (25), une unité de commande (26) de la cellule de commutation, un capteur de courant (29) placé entre le point commun (A) et l'étage de filtrage (25), et relié à l'unité de commande (26), destiné à détecter une augmentation au-dessus d'un seuil d'un courant circulant du premier interrupteur (K1) vers l'étage de filtrage (25), cette augmentation du courant traduisant l'apparition du court-circuit, le convertisseur (22) étant destiné à être connecté, côté alternatif à la source de tension alternative (21) et étant connecté côté continu à la cellule de commutation (23), en utilisation, le premier interrupteur (K1) est monté entre le convertisseur (22) et le réseau à courant continu (24) via l'étage de filtrage (25), le second interrupteur (K2) formant un ensemble parallèle avec l'étage de filtrage (25) et le réseau à courant continu (24),
le procédé comportant, en mode source d'énergie, en l'absence de court-circuit côté réseau à courant continu, une étape de blocage du second interrupteur (K2) et de commande du premier interrupteur (K1) pour le rendre alternativement passant ou bloqué, afin d'autoriser une circulation de courant du convertisseur (22) vers le réseau à courant continu (24) via le premier interrupteur (K1) et l'étage de filtrage (25) et en présence d'un court-circuit, une étape de blocage du premier interrupteur (K1) et d'écoulement d'un courant de court-circuit du réseau à courant continu (24) vers l'étage de filtrage (25) via le second interrupteur (K2) et une étape de réglage de la durée et de l'amplitude du courant de court-circuit en appliquant une modulation de largeur d'impulsion au premier interrupteur (K1).

13. Procédé de commande selon la revendication 12, comportant en mode de récupération d'énergie, lorsque une tension (E) aux bornes du dispositif de conversion électrique (20) côté continu est supérieure à une tension (V_{DC}) aux bornes du convertisseur (22) côté continu, une étape de blocage du second interrupteur (K2) permettant la circulation d'un courant de récupération de l'étage de filtrage (25) vers le convertisseur (22) en passant par le premier interrupteur (K1).

14. Procédé de commande selon la revendication 12, comportant en mode de récupération d'énergie, lorsqu'une tension (E) aux bornes du dispositif de conversion électrique (20) côté continu est inférieure à une tension (V_{DC}) aux bornes du convertisseur (22) côté continu, une étape de commande du second interrupteur (K2) pour le rendre alternativement passant ou bloqué, lorsqu'il est passant, une étape d'accumulation d'énergie dans l'étage de filtrage (25) et lorsqu'il est bloqué une étape de libération de cette énergie sous la forme d'un courant de récupération circulant vers le convertisseur (22) via le premier interrupteur (K1).

## Patentansprüche

1. Vorrichtung zur elektrischen AC-DC-Umwandlung, die dazu ausgelegt ist, AC-seitig an eine Wechselspannungsquelle (21) und DC-seitig an ein Gleichstromnetz (24) angeschlossen zu sein, umfassend einen AC-DC-Wandler (22), eine Schaltzelle (23) mit zwei bidirektionalen Stromunterbrechern (K1, K2), die einen gemeinsamen Punkt (A) und einen Endanschluss (B1, B2) haben, eine induktive Filterstufe (25), eine Steuereinheit (26) für die Schaltzelle, wobei der Wandler (22) dazu ausgelegt ist, AC-seitig an die Wechselspannungsquelle (21) angeschlossen zu sein und DC-seitig an die Schaltzelle (23) angeschlossen ist, wobei im Betrieb der erste Unterbrecher (K1) zwischen dem Wandler (22) und dem Gleichstromnetz (24) über die Filterstufe (25) montiert ist, wobei der zweite Unterbrecher (K2) eine Anordnung parallel zur Filterstufe (25) und zum Gleichstromnetz (24) bildet, wobei im Energiequellemodus bei Abwesenheit eines Kurzschlusses auf der Seite des Gleichstromnetzes die Steuereinheit (26) den zweiten Unterbrecher (K2) blockiert hält und den ersten Unterbrecher (K1) so steuert, dass er alternierend durchleitend oder blockiert gemacht wird, um eine Stromzirkulation vom Wandler (22) hin zum Gleichstromnetz (24) über den ersten Unterbrecher (K1) und die Filterstufe (25) zu ermöglichen, **dadurch gekennzeichnet, dass** sie ferner einen Stromsensor (29) umfasst, der zwischen dem gemeinsamen Punkt (A) und der Filterstufe (25) platziert und mit der Steuereinheit (26) verbunden ist, der dazu ausgelegt ist, eine Zunahme eines Stroms, der vom ersten Unterbrecher (K1) hin zur Filterstufe (25) fließt, über eine Schwelle hinaus zu erfassen, wobei diese Stromzunahme das Auftreten des Kurzschlusses ausdrückt, und dass die Steuereinheit bei Anwesenheit eines Kurzschlusses den ersten Unterbrecher (K1) blockiert und die Zirkulation eines Kurzschlussstroms vom Gleichstromnetz (24) hin zur Filterstufe (25) über den zweiten Unterbrecher (K2) erfolgen lässt, und die Amplitude und die Dauer des Kurzschlussstroms durch Steuerung der Leitung des ersten Unterbrechers (K1) durch Modulation der Pulsbreite regelt.

2. Vorrichtung zur elektrischen Umwandlung nach Anspruch 2, bei der der erste und der zweite Unterbrecher (K1, K2) der Schaltzelle (23) jeweils ein Paar von elektronischen Komponenten (17K1, 18K1; 17K2, 18K2) umfasst, die antiparallel montiert sind, wobei das eine zur gesteuerten Umschaltung und das andere zur natürlichen Umschaltung ausgelegt ist.

3. Vorrichtung zur elektrischen Umwandlung nach Anspruch 2, bei der die Zirkulation des Kurzschlussstroms über die elektronische Komponente mit natürlicher Umschaltung (18K2) des zweiten Unterbrechers (K2) erfolgt.

4. Vorrichtung zur elektrischen Umwandlung nach einem der Ansprüche 2 oder 3, bei der die elektronische Komponente mit gesteuerter Umschaltung (17K1, 17K2) ein Bipolartransistor, ein MOS-Transistor, ein IGBT-Transistor, ein Thyristor, ein GTO-Thyristor, ein IGCT-Thyristor ist, und die elektronische Komponente mit natürlicher Umschaltung (18K1, 18K2) eine Diode ist.

5. Vorrichtung zur elektrischen Umwandlung nach einem der Ansprüche 1 bis 4, ferner umfassend einen Kondensator (C), der dazu ausgelegt ist, parallel zum Gleichstromnetz (24) montiert zu sein.

6. Vorrichtung zur elektrischen Umwandlung nach einem der vorhergehenden Ansprüche, bei der im Energiegewinnungsmodus, wenn eine Spannung (E) an den Anschlüssen der elektrischen Umwandlungsvorrichtung (20) auf der DC-Seite größer ist als eine Spannung (V_{DC}) an den Anschlüssen des Wandlers (22) auf der DC-Seite, die Steuereinheit (26) den zweiten Unterbrecher (K2) blockiert, was die Zirkulation eines Gewinnungsstroms von der Filterstufe (25) hin zum Wandler (22) über den ersten Unterbrecher (K1) ermöglicht.

7. Vorrichtung zur elektrischen Umwandlung nach Anspruch 6, bei der die Zirkulation des Gewinnungsstroms in der elektronischen Komponente mit natürlicher Umschaltung (18K1) des ersten Unterbrechers (K1) erfolgt.

8. Vorrichtung zur elektrischen Umwandlung nach einem der Ansprüche 1 bis 5, bei der im Energiegewinnungsmodus, wenn eine Spannung (E) an den Anschlüssen der elektrischen Umwandlungsvorrichtung (20) auf der DC-Seite kleiner ist als eine Spannung (V_{DC}) an den Anschlüssen des Wandlers (22) auf der DC-Seite, die Steuereinheit (26) den zweiten Unterbrecher (K2) derart steuert, dass er alternierend durchleitend oder blockiert gemacht wird, um im durchleitenden Zustand eine Ansammlung von Energie in der Filterstufe (25) und im blockierten Zustand eine Freisetzung dieser Energie in Form eines Gewinnungsstroms zu ermöglichen, der über den ersten Unterbrecher (K1) hin zum Wandler (22) zirkuliert.

9. Vorrichtung zur elektrischen Umwandlung nach Anspruch 8, bei der die Zirkulation des Gewinnungsstroms in der elektronischen Komponente mit natürlicher Umschaltung (18K1) des ersten Unterbrechers (K1) erfolgt.

10. Vorrichtung zur elektrischen Umwandlung nach einem der Ansprüche 1 bis 9, ferner umfassend Energiespeichermittel (30), die an den Endanschlüssen (B1, B2) der Schaltzelle (23) angeschlossen sind.

11. Vorrichtung zur elektrischen Umwandlung nach einem der Ansprüche 1 bis 9, bei der die Schaltzelle (23) die erste Schaltzelle ist, wobei die Vorrichtung zur elektrischen Umwandlung ferner eine zweite Schaltzelle (23') umfasst, wobei ein erster und ein zweiter bidirektionaler Stromunterbrecher (K1 K2') in Reihe montiert sind und Endanschlüsse (B1 B2') definieren, die mit den Endanschlüssen (B1, B2) der ersten Schaltzelle (23) und einem gemeinsamen Punkt (A') verbunden sind, wobei eine zweite induktive Filterstufe (25') und Energiespeichermittel (30) eine Reihenanordnung bilden, die zwischen dem gemeinsamen Punkt (A') und dem Endanschluss (B2') des zweiten Unterbrechers (K2') der zweiten Schaltzelle (23') montiert ist.

12. Verfahren zur Steuerung einer Vorrichtung zur elektrischen AC-DC-Umwandlung, die dazu ausgelegt ist, in einem Energiequellemodus oder einem Energiegewinnungsmodus zu arbeiten, und die dazu ausgelegt ist, AC-seitig an eine Wechselspannungsquelle (21) und DC-seitig an ein Gleichstromnetz (24) angeschlossen zu sein, umfassend einen AC-DC-Wandler (22), eine Schaltzelle (23) mit zwei bidirektionalen Stromunterbrechern (K1, K2) mit einem gemeinsamen Punkt (A) und einem Endanschluss (B1, B2), eine induktive Filterstufe (25), eine Steuereinheit (26) für die Schaltzelle, einen Stromsensor (29), der zwischen dem gemeinsamen Punkt (A) und der Filterstufe (25) platziert ist und mit der Steuereinheit (26) verbunden ist, der dazu ausgelegt ist, eine Zunahme eines Stroms, der vom ersten Unterbrecher (K1) hin zur Filterstufe (25) zirkuliert, über eine Schwelle zu erfassen, wobei diese Stromzunahme das Auftreten eines Kurzschlusses ausdrückt, wobei der Wandler (22) dazu ausgelegt ist, AC-seitig an die Wechselspannungsquelle (21) angeschlossen zu werden und DC-seitig an die Steuerzelle (23) angeschlossen ist, wobei im Gebrauch der erste Unterbrecher (K1) zwischen dem Wandler (22) und dem Gleichstromnetz (24) über die Filterstufe (25) montiert ist, wobei der zweite Unterbrecher (K2) eine Anordnung parallel zur Filterstufe (25) und zum Gleichstromnetz (24) bildet,
wobei das Verfahren im Energiequellemodus bei Abwesenheit eines Kurzschlusses auf der Seite des Gleichstromnetzes einen Schritt des Blockierens des zweiten Unterbrechers (K2) und des Steuerns des ersten Unterbrechers (K1) derart umfasst, dass er alternierend durchleitend oder blockiert gemacht wird, um eine Stromzirkulation vom Wandler (22) hin zum Gleichstromnetz (24) über den ersten Unterbrecher (K1) und die Filterstufe (25) zu ermöglichen, und bei Auftreten eines Kurzschlusses einen Schritt des Blockierens des ersten Unterbrechers (K1) und des Abführens eines Kurzschlussstroms vom Gleichstromnetz (24) hin zur Filterstufe (25) über den zweiten Unterbrecher (K2), sowie einen Schritt der Regelung der Dauer und der Amplitude des Kurzschlussstroms durch Anwenden einer Modulation der Pulsbreite beim ersten Unterbrecher (K1).

13. Verfahren zur Steuerung nach Anspruch 12, umfassend im Energiegewinnungsmodus, wenn eine Spannung (E) an den Anschlüssen der elektrischen Umwandlungsvorrichtung (20) auf der DC-Seite größer ist als eine Spannung (V_{DC}) an den Anschlüssen des Wandlers (22) auf der DC-Seite, einen Schritt des Blockierens des zweiten Unterbrechers (K2), was die Zirkulation eines Gewinnungsstroms von der Filterstufe (25) hin zum Wandler (22) über den ersten Unterbrecher (K1) ermöglicht.

14. Verfahren zur Steuerung nach Anspruch 12, umfassend im Energiegewinnungsmodus, wenn eine Spannung (E) an den Anschlüssen der elektrischen Umwandlungsvorrichtung (20) auf der DC-Seite kleiner ist als eine Spannung (V_{DC}) an den Anschlüssen des Wandlers (22) auf der DC-Seite, einen Schritt des Steuerns des zweiten Unterbrechers (K2) derart, dass er alternierend durchleitend oder blockiert gemacht wird, und wenn er durchleitet, einen Schritt des Ansammelns von Energie in der Filterstufe (25), und wenn er blockiert ist, einen Schritt des Freisetzens dieser Energie in Form eines Gewinnungsstroms, der über den ersten Unterbrecher (K1) hin zum Wandler (22) zirkuliert.

## Claims

1. An AC/DC electrical converter device intended to be connected on the AC side to an AC voltage source (21) and on the DC side to a DC power distribution network (24), comprising an AC/DC converter (22), a switching cell (23) with two switches (K1, K2) that are bidirectional for current, sharing a common point (A) and each having a respective end terminal (B1, B2), an inductive filter stage (25), a control unit (26) for the switching cell; the converter (22) being intended to be connected on the AC side to the AC voltage source (21) and being connected on the DC side to the switching cell (23); in use, the first switch (K1) is connected between the converter (22) and the DC power distribution network (24) via the filter stage (25), the second switch (K2) forming a combination in parallel with the filter stage (25) and the DC power distribution network (24); in energy source mode, in the absence of a short circuit on the DC power distribution network side, the control unit (26) holds the second switch (K2) off and controls the first switch (K1) to turn it alternately on and off, in order to authorize flow of current from the converter (22) towards the DC power distribution network (24) via the first switch (K1) and the filter stage (25), **characterized in that** it further comprises a current sensor (29) placed between the common point (A) and the filter stage (25), and connected to the control unit (26), intended to detect an increase above a threshold of a current flowing from the first switch (K1) towards the filter stage (25), this increase in the current reflecting the appearance of the short circuit, and **in that**, the control unit in the presence of a short circuit, turns off the first switch (K1) and allows a short circuit current to flow from the DC power distribution network (24) towards the filter stage (25) via the second switch (K2) and adjusts the amplitude and the duration of the short-circuit current by controlling conduction of the first switch (K1) by pulse width modulation.

2. An electrical converter device according to claim 1, wherein each of the first and second switches (K1, K2) of the switching cell (23) includes a pair of electronic components (17K1, 18K1; 17K2, 18K2) connected in anti-parallel, one being of forced switching type and the other of natural switching type.

3. An electrical converter device according to claim 2, wherein the short-circuit current flows through the natural switching electronic component (18K2) of the second switch (K2).

4. An electrical converter device according to claim 2 or claim 3, wherein the forced switching electronic components (17K1, 17K2) is a bipolar transistor, an MOS transistor, an IGBT transistor, a thyristor, a GTO thyristor, or an IGCT thyristor and the natural switching electronic component (18K1, 18K2) is a diode.

5. An electrical converter device according to any one of claims 1 to 4, further including a capacitor (C) intended to be connected in parallel with the DC power distribution network (24).

6. An electrical converter device according to any preceding claim, wherein, in energy recovery mode, when the voltage (E) at the terminals of the electrical converter device (20) on the DC side is greater than the voltage (V_{DC}) at the terminals of the converter (22) on the DC side, the control unit (26) turns off the second switch (K2), enabling a recovery current to flow from the filter stage (25) towards the converter (22) via the first switch (K1).

7. An electrical converter device according to claim 6, when dependent on claim 2, wherein the recovery current flows in the natural switching electronic component (18K1) of the first switch (K1).

8. An electrical converter device according to any one of claims 1 to 7, wherein in energy recovery mode, when the voltage (E) at the terminals of the electrical converter device (20) on the DC side is less than the voltage (V_{DC}) at the terminals of the converter (22) on the DC side, the control unit (26) commands the second switch (K2) to turn it alternately on and off, in order to authorize when it is on an accumulation of energy in the filter stage (25) and when it is off a release of that energy in the form of a recovery current flowing towards the converter (22) via the first switch (K1).

9. An electrical converter device according to claim 8, wherein the recovery current flows in the natural switching electronic component (18K1) of the first switch (K1).

10. An electrical converter device according to any one of claims 1 to 9, further including energy storage means (30) connected to the end terminals (B1, B2) of the switching cell (23).

11. An electrical converter device according to any one of claims 1 to 9, wherein the switching cell (23) is a first switching cell, the electrical converter device further including a second switching cell (23') with first and second switches (K1', K2') bidirectional for current, connected in series and defining end terminals (B1', B2') connected to the end terminals (B1, B2) of the first switching cell (23) and a common point (A'), a second inductor filter stage (25') and energy storage means (30) forming a series combination connected between the common point (A') and the end terminal (B2') of the second switch (K2') of the second switching cell (23').

12. A method of controlling an AC/DC electrical converter device adapted to operate in energy source mode or in energy recovery mode, intended to be connected, on the AC side, to an AC voltage source (21), and, on the DC side, to a DC power distribution network (24) including an AC/DC converter (22), a switching cell (23) with two switches (K1, K2) that are bidirectional for current having a common point (A) and an end terminal (B1, B2), an inductive filter stage (25), a control unit (26) for the switching cell, a current sensor (29) placed between the common point (A) and the filter stage (25), and connected to the control unit (26), intended to detect an increase above a threshold of a current flowing from the first switch (K1) towards the filter stage (25), this increase in the current reflecting the appearance of the short circuit, the converter (22) being intended to be connected on the AC side to the AC voltage source (21) and being connected on the DC side to the switching cell (23); in use, the first switch (K1) is connected between the converter (22) and the DC power distribution network (24) via the filter stage (25), the second switch (K2) forming a combination in parallel with the filter stage (25) and the DC power distribution network (24);
the method including, in energy source mode, in the absence of a short circuit on the DC power distribution network side, a step of turning off the second switch (K2) and turning the first switch (K1) alternately on and off, in order to allow current to flow from the converter (22) towards the DC power distribution network (24) via the first switch (K1) and the filter stage (25) and, in the presence of a short circuit, a step of turning off the first switch (K1) in which a short-circuit current flows from the DC power distribution network (24) towards the filter stage (25) via the second switch (K2), and a step of adjusting the duration and the amplitude of the short-circuit current are adjusted by applying pulse width modulation to the first switch.

13. A control method according to claim 12, including in energy recovery mode, when a voltage (E) at the terminals of the electrical converter device (20) on the DC side is greater than a voltage (V_{DC}) at the terminals of the converter (22) on the DC side, a step of turning off the second switch (K2) allowing a recovery current to flow from the filter stage (25) towards the converter (22) via the first switch (K1).

14. A control method according to claim 12, including in energy recovery mode, when a voltage (E) at the terminals of the electrical converter device (20) on the DC side is less than a voltage (V_{DC}) at the terminals of the converter (22) on the DC side, a step of controlling the second switch (K2) to turn it alternately on and off, and, when it is on, a step of accumulation of energy in the filter stage (25) and, when it is off, a step of releasing that energy in the form of a recovery current flowing towards the converter (22) via the first switch (K1).
